# EUROPÄISCHE PATENTSCHRIFT

(11) **EP 0 355 372 B1**
(45) Veröffentlichungstag und Bekanntmachung des Hinweises auf die Patenterteilung: **15.03.1995**
(21) Anmeldenummer: 89112745.8
(22) Anmeldetag: 12.07.1989
(51) Int. Cl.: G07F 7/10, G06K 19/06

(54) **Datenträger-gesteuertes Endgerät in einem Datenaustauschsystem**
Data carrier controlled terminal for a data exchange system
Terminal commandé par support de données dans un système d'échange de données

(30) Priorität: 20.07.1988 CH 2777/88
(43) Veröffentlichungstag der Anmeldung: 28.02.1990
(73) Patentinhaber: SPA Syspatronic AG, CH-6302 Zug (CH)
(72) Erfinder: Schwartz, Hermann, CH-8808 Pfäffikon SZ (CH)
(74) Vertreter: OK pat AG

(56) Entgegenhaltungen:
- EP-A- 0 049 650
- EP-A- 0 096 599
- EP-A- 0 111 381
- EP-A- 0 193 920
- EP-A- 0 305 004
- WO-A-88/01818
- WO-A-88/03297
- DE-A- 3 023 427
- DE-A- 3 435 697
- US-A- 4 709 136

## Beschreibung

Die Erfindung betrifft ein durch tragbare Datenträger gesteuertes Endgerät in einem Datenaustauschsystem gemäß dem Oberbegriff des Anspruchs 1, sowie ein austauschbares, Mikroprozessor-bestücktes Steuerungsmodul gemäß dem Oberbegriff des Anspruchs 8.

Datenaustauschsysteme mit Endgeräten (Terminals") dieser Art sind in steter Entwicklung für immer zahlreichere und vielfältigere Anwendungen begriffen. Vor allem Systeme mit Benützer-Datenträgern in Form von Karten mit eingebauter aktiver, integrierter Halbleiterschaltung (sogenannte Chip-Karten) ermöglichen immer komplexere Anwendungen in ausgedehnten Datennetzen, wobei in den meisten Fällen der Sicherheit und der Geheimhaltung bei der Datenübertragung vorrangige Bedeutung zukommt. Um die Uebertragung grosser Datenmengen (gegebenenfalls über weite Distanzen) möglichst zu reduzieren, besteht eine starke Tendenz zur Dezentralisierung, d.h. Verlagerung von Datenverarbeitungs-Funktionen vom Zentralrechner des Systems in die (meist in Vielzahl vorhandenen) lokalen Endgeräte. Dies bedingt jedoch entsprechend aufwendigere und kostspieligere Endgeräte, und in ähnlichem Masse nimmt auch das Risiko unerlaubter Manipulationen und des missbräuchlichen Zugriffs zu geheimen Daten bei den Endgeräten zu; in dieser Hinsicht sind besonders diejenigen Schaltungsteile kritisch, welche die Prüfung der Identität (Berechtigung eines Benützers zum Gebrauch eines bestimmten Datenträgers) und der Authentizität (Vorliegen eines "echten", zum System gehörigen Datenträgers) vornehmen, weil solche dezentralen Prüfungen die Speicherung geheimer Prüfschlüssel im Endgerät voraussetzen.

Ein Endgerät der eingangs genannten Art ist aus der EP-A-0 096 599 bekannt. Im Gerät eingebaut befinden sich u.a. eine Datenverarbeitungsschaltung (TM) und ein Speicher (M) mit gespeichertem Programm (P) und Geheimcode (S). Bei einer Variante ist der Anschluss eines weiteren austauschbaren Datenträgers C1 (ausser dem Benützer-Datenträger C) vorgesehen, der den Schaltungsteil TM enthält und in den dann das Programm P zu übertragen ist; dabei verbleiben aber kritische Schaltungsteile - jedenfalls der Speicher M mit Geheimcode S - im Endgerät, und die Kommunikation mit dem Benützer-Datenträger C erfolgt weiterhin mit diesen Teilen im Gerät. Dadurch kann das Risiko betrügerischer Eingriffe am Gerät oder des unberechtigten Datenzugriffs nicht ausgeschlossen werden.

Weitere Endgeräte mit mehreren Verbindungseinheiten zum Anschluss austauschbarer Datenträger sind z.B. aus der EP-A-0 049 650 (=US-A-4 450 535), Fig. 1, oder der EP-A-0 193 920 bekannt.

Bei diesen Geräten sind die Schaltungsmittel für die Durchführung von Identitäts- und Authentizitätsprüfungen fester Bestandteil des Gerätes, d.h. sie sind im Terminal eingebaut, wo auch die spezifischen Ablaufprogramme gespeichert sind. Zur Durchführung der genannten Prüfvorgänge müssen also jeweils die geheimen Prüfungsschlüssel und gegebenenfalls weitere geheime Daten aus den austauschbaren Datenträgern ausgelesen und im Gerät zwischengespeichert werden. Dadurch ergibt sich ein aufwendiger und wenig flexibler Geräteaufbau, und vor allem sind die Geräte auch anfällig für unberechtigten Datenzugriff und betrügerische Manipulationen.

Die vorliegende Erfindung hat deshalb zur Aufgabe, den Entwurf und den Bau von komplexen Endgeräten für dezentralisierte und mannigfaltige Anwendungen zu vereinfachen und gleichzeitig das Sicherheitsrisiko entscheidend herabzusetzen.

Diese Aufgabe wird erfindungsgemäss dadurch gelöst, dass sämtliche sicherheitsrelevanten Schaltungsteile und geheimen Speicherinhalte zur Durchführung der genannten Prüfungen in mindestens einem der weiteren austauschbaren Steuerungsmodule (8, 9) untergebracht sind, wobei in Verbindung mit einem Steuer- und Rechenwerk im mindestens einen Steuerungsmodul mechanisch sowie kryptographisch gegen unautorisiertes Auslesen geschützte Speicherbereiche für die Aufnahme der geheimen Prüfschlüssel, weiterer geheimer Daten sowie anwendungsspezifischer Ablaufprogramme vorhanden sind.

Dieses Geräte-Konzept ermöglicht eine weitgehend modulare Bauweise und damit eine einfache, kostengünstige und anwendungsunabhängige Fertigung von multifunktionalen Endgeräten. Zudem bedeutet die "Modularisierung" ähnlich hohe Sicherheit gegen Datenzugriff und Manipulation am Gerät wie bei Mikroprozessor-bestückten Benützerkarten, wodurch auch der Bau von weitgehend autonomen Endgeräten - und entsprechend beträchtliche Einsparungen bei der Datenfernübertragung - ohne erhöhtes Risiko möglich werden.

Besondere, bevorzugte Ausführungsformen von Endgeräten wie auch von zugehörigen Steuerungsmodulen sind in den Ansprüchen 2 bis 7, 9 und 10 angegeben. Weitere Merkmale der Erfindung ergeben sich aus der nachstehenden Beschreibung von Ausführungsbeispielen im Zusammenhang mit der Zeichnung. Es zeigen:
- Fig. 1: ein Beispiel eines erfindungsgemässen Endgerätes im Ueberblick,
- Fig. 2: ein vereinfachtes Blockschaltbild des Gerätes nach Fig. 1, und
- Fig. 3: schematisch einen beispielsweisen Aufbau eines Mikroprozessors in einem austauschbaren Steuerungsmodul.

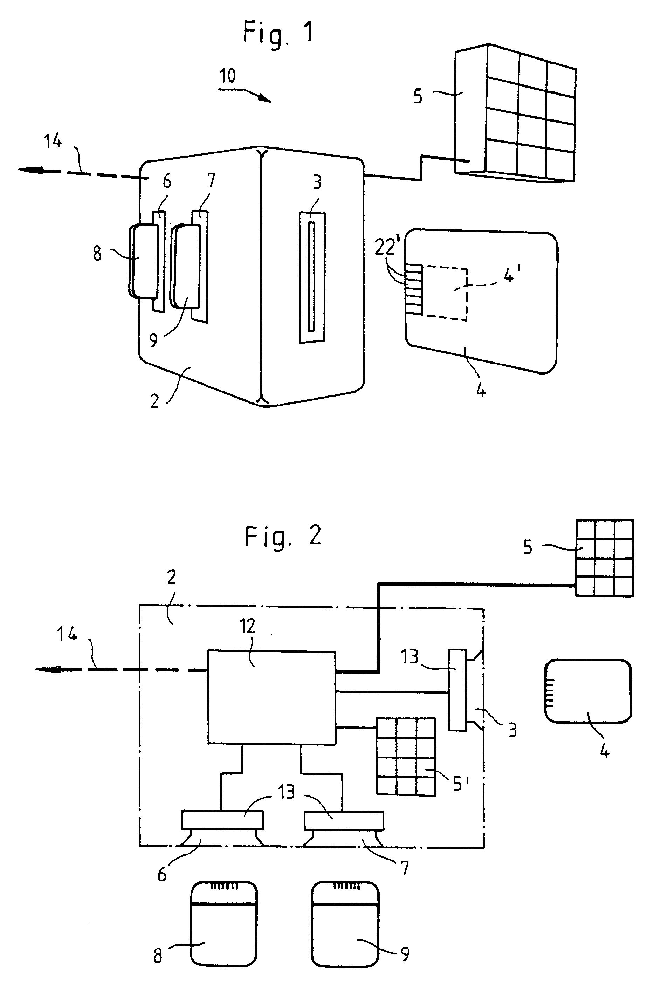

Das Endgerät 10 eines Datenaustauschsystems, wie es in Fig. 1 dargestellt ist, findet z.B. Anwendung als sogenannter "point of sale" POS oder beispielsweise als Zutritt-Kontrollgerät usw. Das Endgerät 10 wird durch tragbare, austauschbare Benützer-Datenträger 4 gesteuert, hier in Form von mit galvanischen Kontakten 22′ versehenen Steckkarten, die mit einer aktiven, integrierten Halbleiterschaltung 4′ bestückt sind (sog. Chip-Karte mit einem oder mehreren Halbleiterbausteinen). Als Verbindungseinheit für den Anschluss der austauschbaren Benützer-Datenträger 4 ist eine Kontakteinheit 3 vorgesehen, die, wie dargestellt, in einer Schreib-Lesestation 2 eingebaut sein kann. Eine von den Benützern zu bedienende Dateneingabeeinheit ist als Tastenblock 5 dargestellt, welcher von der Station 2 getrennt aufgestellt und mit dieser über Leitungen verbunden ist. Eine weitere Dateneingabeeinheit kann für das Bedienungspersonal des Endgerätes (z.B. Händler, Kontrollperson) vorhanden sein in Fig. 1 nicht sichtbar, in Fig. 2 mit 5′ bezeichnet), ebenso können übliche alphanumerische Anzeigeeinheiten für Personal und Benützer vorhanden sein (nicht dargestellt). Mit 14 sind externe Verbindungen des Endgerätes zu anderen Einheiten des Datenaustauschsystems bezeichnet, beispielsweise zu einem Zentralrechner, zu anderen Endgeräten usw.

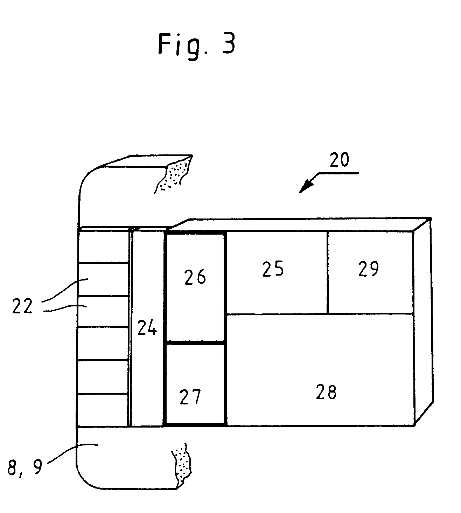

Das Endgerät 10 weist zwei weitere, als Kontakteinheiten 6 und 7 ausgebildete Verbindungseinheiten auf, an denen je ein Steuerungsmodul 8 bzw. 9 angeschlossen ist. Diese Steuerungsmodule sind austauschbar und mit einem oder mehreren Mikropro-zessoren bestückt, deren Aufbau und Funktion weiter unten erläutert ist. Im Falle der Verwendung von Benützer-Datenträgern 4 in Form von kontaktierten Steckkarten ist es von Vorteil, wenn im Endgerät für den Anschluss sowohl der Steckkarten 4 wie auch der Steuerungsmodule 8, 9 immer gleiche Kontakteinheiten 3, 6, 7 und jeweils gleiche zugehörige Ansteuerschaltungen 13 (Fig. 2) verwendet werden; in diesem Fall sind dann auch alle austauschbaren Steuerungsmodule mit einer Steck-Kontaktierung 22 (Fig 3) versehen, die in den Abmessungen und in der Kontaktbelegung mit derjenigen der Steckkarten 4 übereinstimmt.

Die einzelnen austauschbaren, für das Endgerät 10 verfügbaren Steuerungsmodule können funktionell insbesondere verschiedenen Gruppen von zur Anwendung gelangenden Benützer-Datenträgern zugeordnet sein. Bezüglich Anordnung am Gerät bzw. Austauschbarkeit sind je nach Anwendungsfall verschiedene Varianten möglich: Abweichend von Fig. 1 kann (zusätzlich zur Kontakteinheit 3 für die Benützer-Datenträger 4) nur eine einzige weitere Kontakteinheit vorgesehen sein, über welche verschiedene Steuerungsmodule nach Bedarf abwechselnd angeschlossen werden. Im Falle von mehreren Kontakteinheiten 6, 7 können dagegen wie dargestellt mehrere Steuerungsmodule 8, 9 gleichzeitig angeschlossen sein. Ein einzelnes vorhandenes bzw. mehrere gleichzeitig angeschlossene Steuerungsmodule können entweder durch manuelle Dateneingabe (an den Einheiten 5 bzw. 5′) einzeln aktiviert werden, oder aber automatisch aufgrund von Kennungsdaten, die in einem jeweils angeschlossenen Benützer-Datenträger 4 gespeichert sind.

Die einzelnen Funktionseinheiten des Endgerätes 10 können natürlich in verschiedener Weise angeordnet sein: Abweichend von Fig. 1 können zum Beispiel die Kontakteinheit 3, die Dateneingabeeinheit 5 und gegebenenfalls eine Anzeigeeinheit zu einer "Benützer-Konsole" zusammengefasst und getrennt von den übrigen Geräteeinheiten angeordnet sein. Bei Bedarf können mehrere Kontakteinheiten, z.B. für verschiedene Arten von Benützer-Datenträgern, vorhanden sein. Im Falle eines POS-Endgerätes sind vorzugsweise wenigstens eine Dateneingabeeinheit und eine Anzeigeeinheit zu einer "Händler"-Bedienungseinheit zusammengefasst, die wiederum mit einer an sich bekannten elektrischen Datenkasse (für Barzahlung) in Verbindung stehen kann. Es kann ferner zweckmässig sein, die Steuerungsmodule mit ihren Kontakteinheiten örtlich getrennt von den übrigen Funktionseinheiten des Endgerätes unterzubringen.

Ein beispielsweiser Schaltungsaufbau eines Endgerätes - bezogen auf das Beispiel nach Fig. 1 - ist in Fig. 2 schematisch dargestellt. Die Station 2 enthält im wesentlichen eine Anwähl- oder Kommutatorschaltung 12, an welche externe Verbindungsleitungen 14 sowie sämtliche Funktionseinheiten des Endgerätes angeschlossen sind, wie Dateneingabeeinheiten 5, 5′ und Ansteuerschaltungen 13 für die Kontakteinheiten 3 bzw. 6 und 7. Die Anwählschaltung 12 stellt im wesentlichen nur die Verbindungen zwischen den genannten Funktionseinheiten und zu externen Systemkomponenten her. Sämtliche sicherheitsrelevanten Schaltungsteile, insbesondere für die Durchführung der Identitäts- und Authentizitätsprüfungen, wie auch die für verschiedene Datenträger-Typen (z.B. Kartengruppen) spezifischen Schaltungen und Ablaufprogramme sind dagegen in den Mikroprozessoren der austauschbaren Steuerungsmodule 8, 9 usw. untergebracht. Insbesondere sind auch die geheimen Prüfschlüssel für die erwähnten Prüfungen nur in diesen Steuerungsmodulen gespeichert.

In Fig. 3 ist ein möglicher Aufbau des Mikroprozessors 20 eines Steuerungsmoduls schematisch dargestellt (die integrierte Halbleiterschaltung ist bevorzugt, jedoch nicht notwendigerweise auf einem einzigen Chip angeordnet). An die Kontaktierung 22 schliesst ein Schnittstellenbereich 24 für den kryptographisch gesicherten Datenaustausch an, wobei ein spezielles (zusätzliches) Rechenwerk zur Durchführung hochentwickelter kryptographischer Verfahren innerhalb des Prozessors vorgesehen sein kann. Das eigentliche Steuer- und Rechenwerk des Mikroprozessors ist mit dem Bereich 25 dargestellt. Dem Steuer- und Rechenwerk 25 (CPU) sind verschiedene Speicherbereiche 26 bis 29 zugeordnet. Von diesen sind ein Bereich 26 zur Speicherung geheim zu haltender Daten und ein Bereich 27 zur Speicherung kryptographischer Prüfschlüssel (Identitäts- und Authentizitätsprüfungen) hinsichtlich Zugriff besonders kryptographisch geschützt. Für weitere, nicht speziell zu schützende Daten ist ein Speicherbereich 29 vorgesehen, und im Bereich 28 sind Ablaufprogramme für den Daten- und Befehlsaustausch gespeichert, die für den jeweiligen Anwendungsfall (Systemapplikation, Typ des Endgerätes, Art der Benützer-Datenträger usw.) spezifisch sind.

Jegliche Kommunikation über die Schaltung 12 (Fig. 2) von und nach den Steuerungsmodulen 8, 9 - im Falle von Chip-Karten auch von und nach den Benützer-Datenträgern 4 - ist durch kryptographische Verfahren geschützt (symmetrische und/oder asymmetrische kryptographische Verfahren wie beispielsweise DES, Data Encryption Standards, RSA-Verfahren usw.). Die Anwendung dieser kryptographischen Verfahren bei Verschlüsselung und Entschlüsselung, Autorisierung, Authentikation sowie Bildung und Prüfung von elektronischen Unterschriften (wie z.B. "Message Authentication Codes", "Authentication Identifier", "FAC - File Authentication Code") erfolgt innerhalb der Steuerungsmodule und gegebenenfalls der Chip-Karten. Die dabei benötigten geheimen Schlüssel sind nur in deren geschützten Speicherbereichen vorhanden. Sie werden ausschliesslich innerhalb des Steuerungsmoduls verwendet und nicht in die Station 2 ausgelesen. Dasselbe gilt für die spezifischen Ablaufprogramme, was bedeutet, dass das Modul die gesamten Prüfvorgänge, die Datenaustausch-Operationen usw. aktiv steuert. Schliesslich kann auch die Protokollierung und/oder Kontenführung bezüglich der über das Endgerät abgewickelten Vorgänge innerhalb des Steuerungsmoduls in hierfür vorgesehenen Speicherbereichen erfolgen.

Bei Verwendung eines Hauptschlüssels oder davon abgeleiteter Schlüssel in einem Steuerungsmodul, welche Schlüssel jeweils spezifisch für eine bestimmte Gruppe bzw. eine bestimmte Art von BenützerDatenträgern sind, ermöglicht dies die automatische Identifizierung und Aktivierung eines bestimmten Steuerungsmoduls, sobald ein Datenträger 4 der betreffenden Art zum Einsatz kommt. Anderseits kann ein Modul auch durch manuelle Dateneingabe, z.B. vom Bedienungspersonal des Endgerätes an der Einheit 5′, aktiviert werden. Insbesondere kann vorgesehen sein, dass ein bestimmtes Steuerungsmodul dadurch gegen unbefugte Benutzung gesichert ist, dass dessen Inbetriebnahme nur durch Eingabe eines Geheimcodes (z.B. PIN) möglich ist.

Ein besonderer Vorteil und eine zusätzliche Sicherheit ist natürlich dadurch gegeben, dass während der Zeitperioden, in denen das Endgerät nicht in Betrieb ist und unbeaufsichtigt bleibt, die Steuerungsmodule weggenommen und an einem sicheren Ort, z.B. in einem Tresor, verwahrt werden können, was natürlich mit den vollständigen Geräten nicht durchführbar wäre. Im Steuerungsmodul sind die integrierten Halbleiterbausteine zudem auch mechanisch, chemisch und physikalisch geschützt eingebaut (mit ähnlichen Techniken, wie sie bei Chip-Karten bekannt sind), d.h. der Versuch einer missbräuchlichen "Freilegung" der Bausteine im Modul (z.B. an einem entwendeten Steuerungsmodul) führt unweigerlich zu deren Funktionsunfähigkeit bzw. Zerstörung bzw. zum Verlust der geheimen Daten.

Umgekehrt ist das Endgerät ohne eingesetztes Steuerungsmodul natürlich nicht funktionsfähig. Da es keine geheimen Daten oder Schaltungsteile für kryptographische Operationen bzw. keine Speicher mit solchen Daten, Schlüsseln oder Informationen enthält, könnte ein unerlaubter Zugriff zur Station 2 höchstens die Funktionsfähigkeit beeinträchtigen, nicht aber die Sicherheit in Frage stellen. Das Endgerät benötigt deshalb bei Nichtbetrieb und bei entfernten und verwahrten Steuerungsmodulen keine besondere Aufsicht oder aufwendige Sicherungsmassnahmen.

Mit dem beschriebenen modularen Aufbau, bei dem sämtliche sicherheitsrelevanten Schaltungsteile und Daten in die Steuerungsmodule verlagert sind, wird eine extrem hohe Sicherheit vor unbefugtem Zugriff zu geheimen Daten und vor betrügerischen Manipulationen am Endgerät erreicht. Ausserdem lassen sich die Geräte unabhängig von der jeweiligen Anwendung praktisch ausschliesslich aus Standardbausteinen zusammenstellen, wodurch sich die Herstellung wesentlich vereinfacht und verbilligt. Es ist schliesslich darauf hinzuweisen, dass die beschriebene Bauweise sich natürlich nicht nur in Verbindung mit Chip-Karten, sondern auch mit anderen Arten von Benützer-Datenträgern, wie Magnetstreifen-Karten, optischen Karten usw. oder Datenträgern mit kombinierten Speichertechniken (sog. Hybrid-Karten) anwenden lässt. Anstelle von Verbindungseinheiten (für den Karten- wie für den Modul-Anschluss) mit galvanischen Kontakten können ferner auch solche mit andersartigen Verbindungstechniken (z.B. induktiv, kapazitiv, optisch usw.) verwendet werden; in solchen Fällen sind unter der "Kontaktierung" der Benützer-Datenträger (Steckkarten) bzw. der Module selbstverständlich die entsprechenden Anschluss- bzw. Uebertragungsorgane zu verstehen.

## Patentansprüche

1. Durch tragbare Datenträger gesteuertes Endgerät (10) in einem Datenaustauschsystem, mit mindestens einer Dateneingabeeinheit (5) und mehreren Verbindungseinheiten (3, 6, 7) für den Anschluss austauschbarer Benützer-Datenträger (4) sowie weiterer austauschbarer Datenträger, die als Mikroprozessor-bestücktes Steuerungsmodul (8, 9) ausgebildet sind und Schaltungsmittel (25) zur gesicherten Durchführung von Identitäts- und Authentizitätsprüfungen enthalten,
dadurch **gekennzeichnet**, dass sämtliche sicherheitsrelevanten Schaltungsteile und geheimen Speicherinhalte zur Durchführung der genannten Prüfungen in mindestens einem der weiteren austauschbaren Steuerungsmodule (8, 9) untergebracht sind, wobei in Verbindung mit einem Steuer- und Rechenwerk (25) im mindestens einen Steuerungsmodul (8, 9) mechanisch sowie kryptographisch gegen unautorisiertes Auslesen geschützte Speicherbereiche (26, 27, 28) für die Aufnahme der geheimen Prüfschlüssel, weiterer geheimer Daten sowie anwendungsspezifischer Ablaufprogramme vorhanden sind.

2. Endgerät nach Anspruch 1, dadurch gekennzeichnet, dass eine Verbindungseinheit für den wahlweisen Anschluss eines von mehreren verschiedenen Steuerungsmodulen (8, 9) vorhanden ist.

3. Endgerät nach Anspruch 1, dadurch gekennzeichnet, dass mehrere Verbindungseinheiten (6, 7) für den Anschluss je eines Steuerungsmoduls (8, 9) vorhanden sind.

4. Endgerät nach Anspruch 2 oder 3, dadurch gekennzeichnet, dass ein angeschlossenes oder mehrere angeschlossene Steuerungsmodule (8, 9) einzeln durch manuelle Dateneingabe und/oder automatisch durch in Benützer-Datenträgern (4) gespeicherte Kennungsdaten aktivierbar sind.

5. Endgerät nach einem der vorangehenden Ansprüche, dadurch gekennzeichnet, dass die Benützer-Datenträger mit einer integrierten Halbleiterschaltung (4′) bestückte Steckkarten (4) sind.

6. Endgerät nach Anspruch 5, dadurch gekennzeichnet, dass gleiche Verbindungseinheiten (3, 6, 7) mit jeweils gleicher zugehöriger Ansteuerschaltung (13) für den Anschluss sowohl der Steckkarten (4) wie auch des mindestens einen Steuerungsmoduls (8, 9) verwendet sind.

7. Endgerät nach einem der vorangehenden Ansprüche, dadurch gekennzeichnet, dass der Datenaustausch von und nach dem mindestens einen Steuerungsmodul (8, 9) durch innerhalb des Steuerungsmoduls durchgeführte kryptographische Verfahren geschützt ist.

8. Austauschbares, Mikroprozessor-bestücktes Steuerungsmodul (8, 9) zur Verwendung mit einem Endgerät (10) nach einem der Ansprüche 1 bis 7, dadurch **gekennzeichnet**, dass es sämtliche sicherheitsrelevanten Schaltungsteile und geheimen Speicherinhalte zur Durchführung der Identitäts- und Authentizitätsprüfungen enthält, wobei in Verbindung mit einem Steuer- und Rechenwerk (25) im Steuerungsmodul (8, 9) mechanisch sowie kryptographisch gegen unautorisiertes Auslesen geschützte Speicherbereiche (26, 27, 28) für die Aufnahme der geheimen Prüfschlüssel, weiterer geheimer Daten sowie anwendungsspezifischer Ablaufprogramme vorhanden sind.

9. Steuerungsmodul nach Anspruch 8 zur Verwendung mit einem Endgerät nach Anspruch. 6, dadurch gekennzeichnet, dass das Modul (8, 9) eine Steck-Kontaktierung (22) aufweist, die in Abmessungen und Kontaktbelegung mit derjenigen (22′) der Benützer-Datenträger (4) übereinstimmt.

10. Steuerungsmodul nach Anspruch 8, dadurch gekennzeichnet, dass es einen Schnittstellenbereich (24) aufweist, welcher zur Durchführung kryptographischer Verfahren beim Datenaustausch ausgebildet ist.

## Claims

1. A terminal (10) in a data exchange system controlled by portable data carriers and having at least one data input unit (5) and a plurality of connecting units (3, 6, 7) for the connection of interchangeable user data carriers (4) as well as additional interchangeable data carriers which are constructed as microprocessor-equipped control modules (8, 9) which contain circuit means (25) for performing identity and authenticity checks in a secure manner, characterised in that all circuit components relating to security and secret memory contents for carrying out the said checks are housed in at least one of the additional interchangeable control modules (8, 9), wherein memory areas (26, 27, 28) mechanically and cryptographically protected from unauthorised read-out for storing secret verification codes, other secret data and application-specific operational programs, are present in at least one control module (8, 9) in association with a control and computational unit (25).

2. A terminal according to claim 1, characterised in that a connection unit is present for the selective connection of any one of a plurality of different control modules (8, 9).

3. A terminal according to claim 1, characterised in that a plurality of connection units (6, 7) is present for the connection of each one of the control modules (8, 9).

4. A terminal according to claim 2 or 3, characterised in that one connected control module or a plurality of connected control modules (8, 9) can be activated individually by manual data input and/or automatically by characteristic data stored in user data carriers (4).

5. A terminal according to any one of the preceding claims, characterised in that the user data carriers are insert cards (4) equipped with an integrated semiconductor circuit (4′).

6. A terminal according to claim 5, characterised in that like connecting units (3, 6, 7) are used with the like associated drive circuit (13) in each case for the connection of both the insert cards (4) and of the at least one control module (8, 9).

7. A terminal according to any one of the preceding claims, characterised in that data exchange to and from the at least one control module (8, 9) is protected by cryptographic procedures carried out inside the control module.

8. An interchangeable, microprocessor-equipped control module (8, 9) for use with a terminal (10) according to any one of claims 1 to 7, characterised in that it contains all the circuit components which are relevant to security and the secret memory contents for carrying out the identity and authenticity checks, wherein memory areas (26, 27, 28) mechanically and cryptographically protected from unauthorised read-out for storing secret verification codes, other secret data, and application-specific operational programs, are present in the control module (8, 9) in association with a control and computational unit (25).

9. A control module according to claim 8 for use with a terminal according to claim 6, characterised in that the module (8, 9) has a plug-in contact system (22) which in its dimensions and contact configuration corresponds to that (22′) of the user data carriers (4).

10. A control module according to claim 8, characterised in that it has an interface region (24) which is designed for carrying out cryptographic processing when data is exchanged.

## Revendications

1. Terminal (10) commandé par des supports de données portables, dans un système d'échange de données, comportant au moins une unité d'entrée de données (5) et plusieurs unités de liaison (3,6,7) pour le raccordement de supports interchangeables de données d'utilisateurs (4) ainsi que d'autres supports de données interchangeables, qui sont réalisés sous la forme d'un module de commande (8,9) équipé d'un microprocesseur et contiennent des moyens formant circuits (25) pour l'exécution sûre de contrôles d'identité et d'authentification, caractérisé en ce que tous les éléments de circuit, qui sont importants pour la sécurité, et tous les contenus secrets de mémoire pour la mise en oeuvre des contrôles indiqués sont logés dans au moins l'un des autres modules de commande interchangeables (8,9), et en liaison avec une unité de commande et de calcul (25) dans au moins un module de commande (8,9), il est prévu des zones de mémoire (26,27,28), qui sont protégées d'une manière mécanique et cryptographique vis-à-vis d'une lecture non autorisée et servent à recevoir les codes de contrôle secrets, d'autres données secrètes ainsi que des programmes d'exécution, qui sont spécifiques à l'application.

2. Terminal selon la revendication 1, caractérisé en ce qu'une unité de liaison est prévue pour le raccordement au choix de l'un de la pluralité de différents modules de commande (8,9).

3. Terminal selon la revendication 1, caractérisé en ce que plusieurs unités de liaison (6,7) sont prévues pour le raccordement des modules de commande respectifs (8,9).

4. Terminal selon la revendication 2 ou 3, caractérisé en ce qu'un module de commande raccordé ou plusieurs modules de commande raccordés (8,9) peuvent être activés individuellement au moyen d'une introduction manuelle de données et/ou automatiquement au moyen de données de caractérisation, qui sont mémorisées dans des supports de données d'utilisateurs (4).

5. Terminal selon l'une des revendications précédentes, caractérisé en ce que les supports de données d'utilisateurs sont des cartes enfichables (4) équipées d'un circuit intégré à semiconducteus (4′).

6. Terminal selon la revendication 5, caractérisé en ce qu'on utilise des unités identiques de liaison (3,6,7) comportant respectivement le même circuit de raccordement associé (13) pour le raccordement aussi bien des cartes enfichables (4) que d'au moins un module de commande (8,9).

7. Terminal selon l'une des revendications précédentes, caractérisé en ce que l'échange des données à partir ou en direction d'au moins un module de commande (8,9) est protégé par des procédés cryptographiques mis en oeuvre à l'intérieur du module de commande.

8. Module de commande interchangeable (8,9), équipé d'un microprocesseur et destiné à être utilisé avec un terminal (10) selon l'une des revendications 1 à 7, caractérisé en ce qu'il contient tous les éléments de circuit importants pour la sécurité et tous les contenus secrets de mémoire pour la mise en oeuvre des contrôles d'identité et d'authentification, et qu'en liaison avec une unité de commande et de calcul (25) dans le module de commande (8,9) il est prévu des zones de mémoire (26,27,28), qui sont protégées d'une manière mécanique et cryptographique vis-à-vis d'une lecture non autorisée et servent à loger les codes de contrôle secrets, d'autres données secrètes ainsi que des programmes d'exécution spécifiques à l'application.

9. Module de commande selon la revendication 8, destiné à être utilisé avec un terminal selon la revendication 6, caractérisé en ce que le module (8,9) possède un système de contacts à enfichage (22), dont les dimensions et l'agencement des contacts sont identiques à ceux du système de contacts à enfichage (22′) du support de données d'utilisateur (4).

10. Module de commande suivant la revendication 8, caractérisé en ce qu'il possède une zone d'interface (24), qui est agencée pour la mise en oeuvre de procédés cryptographiques lors de l'échange des données.
